# EUROPÄISCHE PATENTSCHRIFT

(11) **EP 3 093 965 B1**
(45) Veröffentlichungstag und Bekanntmachung des Hinweises auf die Patenterteilung: **22.11.2017**
(21) Anmeldenummer: 15167268.0
(22) Anmeldetag: 12.05.2015
(51) Int. Cl.: H02K 41/03, F16F 15/03

(54) **KURZHUBIGER LINEARMOTOR**
SHORT STROKE LINEAR MOTOR
MOTEUR LINÉAIRE SUPERCARRÉ

(43) Veröffentlichungstag der Anmeldung: 16.11.2016
(73) Patentinhaber: ETEL S.A., 2112 Môtiers (CH)
(72) Erfinder: Da Conceição Rosa, André-Rafael, 2300 La Chaux-de-Fonds (CH)
(74) Vertreter: Pleyer, Hans Anno

(56) Entgegenhaltungen:
- EP-A2- 2 034 595
- EP-B1- 0 916 038
- US-A- 5 723 917
- US-A1- 2002 021 050
- US-A1- 2004 164 470

## Beschreibung

### GEBIET DER TECHNIK

Die vorliegende Erfindung betrifft einen kurzhubigen Linearmotor. Solche Linearmotoren mit eingeschränktem Arbeitsbereich kommen zum Beispiel zur aktiven Dämpfung von unerwünschten Schwingungen zum Einsatz.

### STAND DER TECHNIK

Zum hochgenauen Positionieren von Objekten mittels einer Positioniereinrichtung ist es beispielsweise aus der Halbleitertechnologie bekannt, schwingungsisolierte Plattformen zu verwenden, denn von außen eingeprägte oder beim Positionieren angeregte Schwingungen der Plattform reduzieren die Genauigkeit der Positionierung erheblich.

Bei der Plattform kann es sich um einen massiven Granitstein mit einer passiven Schwingungsdämpfung handeln, die beispielsweise mittels Federn oder pneumatischen Dämpfern realisiert sein kann. Für besondere Anforderungen sind auch Systeme bekannt, mit denen Schwingungen der Plattform aktiv gedämpft werden können. Hierzu benötigt man einerseits Sensoren, die die unerwünschten Schwingungen erkennen können, sowie andererseits Aktoren, die diesen Schwingungen entgegen wirken können. Diese Aktoren werden zwischen der Plattform und dem Untergrund angeordnet.

Eine gute Einführung in das Thema der aktiven Schwingungsisolation bietet die EP 2075484 A1. Ein Beispiel für einen geeigneten Sensor liefert die nicht vorveröffentlichte Europäische Patentanmeldung mit dem Aktenzeichen EP14168384.7.

Als Aktoren bieten sich eisenlose Linearmotoren an. Bei einem solchen Linearmotor läuft ein Primärteil mit flachen Spulen im Luftspalt eines Sekundärteils mit Magneten, die beidseits des Primärteils auf Magnetträgern angeordnet sind. Durch die sich mit entgegengesetzter Polarität gegenüberliegenden Magnete wird im Luftspalt zwischen den Magneten eine hohe Feldstärke erreicht. Dies ermöglicht es, die im Luftspalt angeordneten Spulen des Primärteils ohne einen Eisenkern auszuführen, so dass auf das Primärteil keine Anziehungskräfte wirken. Die Magnetträger sind untereinander so verbunden, dass sich das Primärteil in einer Längs- oder Arbeitsrichtung des Linearmotors ungehindert durch das Sekundärteil bewegen kann. Dies wird oft mit einem U-förmigen Joch erreicht, wobei die Magnete an den Innenseiten der beiden Schenkel des Jochs angeordnet sind. Es ist auch bekannt, die Magnetträger beidseits des Primärteils miteinander zu verbinden. So ein Linearmotor ist beispielsweise aus der EP 1758231 A1 bekannt.

Schließlich ist aus der EP 0916038 B1 ein Linearmotor bekannt, der für eine aktive Schwingungsisolation eingesetzt wird. Die Figur 2 dieser Schrift zeigt ein Primärteil mit einem flächigen Spulenträger und darin angeordneten flachen Spulen, sowie ein relativ zum Primärteil bewegliches Sekundärteil, das beidseits des Spulenträgers angeordnete Magnetträger mit Magneten aufweist. Nur die mittlere der drei gezeigten flachen Spulen dient hier der Erzeugung einer Kraft, die beiden äußeren Spulen dienen der Messung der zu dämpfenden Vibrationen. Ein U-förmiges Joch trennt die beiden Magnetträger und umgreift das Primärteil.

### ZUSAMMENFASSUNG DER ERFINDUNG

Aufgabe der Erfindung ist es, einen besonders kompakt aufgebauten kurzhubigen Linearmotor zu schaffen, der konstruktiv ausgelegt ist auf die sehr spezielle Anwendung im Bereich der aktiven Schwingungsdämpfung.

Diese Aufgabe wird gelöst durch eine Vorrichtung gemäß Anspruch 1. Vorteilhafte Details dieser Vorrichtung ergeben sich auch aus den von Anspruch 1 abhängigen Ansprüchen.

Es wird ein Linearmotor für kurze Hübe angegeben, mit einem Primärteil mit einem Spulenträger und darin angeordneten Spulen, sowie einem relativ zum Primärteil beweglichen Sekundärteil, das beidseits des Spulenträgers angeordnete Magnetträger mit Magneten aufweist. Abstandshalter trennen die Magnetträger so voneinander, dass der Spulenträger zwischen den beiden Magnetträgern beweglich ist. Die Abstandshalter sind dafür durch Öffnungen im Primärteil geführt.

Es wurde erkannt, dass auf einen Umgriff des Sekundärteils um das Primärteil herum verzichtet werden kann, wenn die als Abstandshalter zwischen den Magnetträgern dienenden Strukturen durch Öffnungen im Primärteil hindurch geführt werden. Es wird so eine besonders kompakte Abmessung des Linearmotors erzielt, ohne dass dessen Leistungsfähigkeit reduziert wird. Anders formuliert ermöglicht die Erfindung, in einem gegebenen Volumen besonders viel Antriebsleistung unterzubringen. Die dadurch bewirkte Einschränkung des Arbeitsbereichs des Linearmotors stört in der speziellen Anwendung in einem System zur aktiven Schwingungsisolation nicht.

Insbesondere im Bereich der aktiven Schwingungsisolation ist eine kompaktere Bauform ein zusätzlicher Vorteil, denn jede Reduzierung der Abmessung des Aktors zwischen dem Untergrund und einer Plattform verringert die Schwingungsneigung des inversen Pendels, als das man eine federnd gelagerte Plattform betrachten kann.

Weitere Vorteile und Details der Erfindung werden anhand der in den Figuren gezeigten Ausführungsbeispiele erklärt.

### KURZE BESCHREIBUNG DER ZEICHNUNGEN

Dabei zeigt
- Figur 1: ein erstes Ausführungsbeispiel eines kurzhubigen Linearmotors,
- Figur 2: diesen Linearmotor in anderen Ansicht,
- Figur 3: diesen Linearmotor in einer ersten Schnittzeichnung,
- Figur 4: diesen Linearmotor in einer zweiten Schnittzeichnung,
- Figur 5: als zweites Ausführungsbeispiel ein modifiziertes Primärteil eines kurzhubigen Linearmotors,
- Figur 6: eine schematische Darstellung einer mittels eines erfindungsgemäßen Linearmotors aktiv schwingungsgedämpften Plattform.

### BESCHREIBUNG DER AUSFÜHRUNGSFORMEN

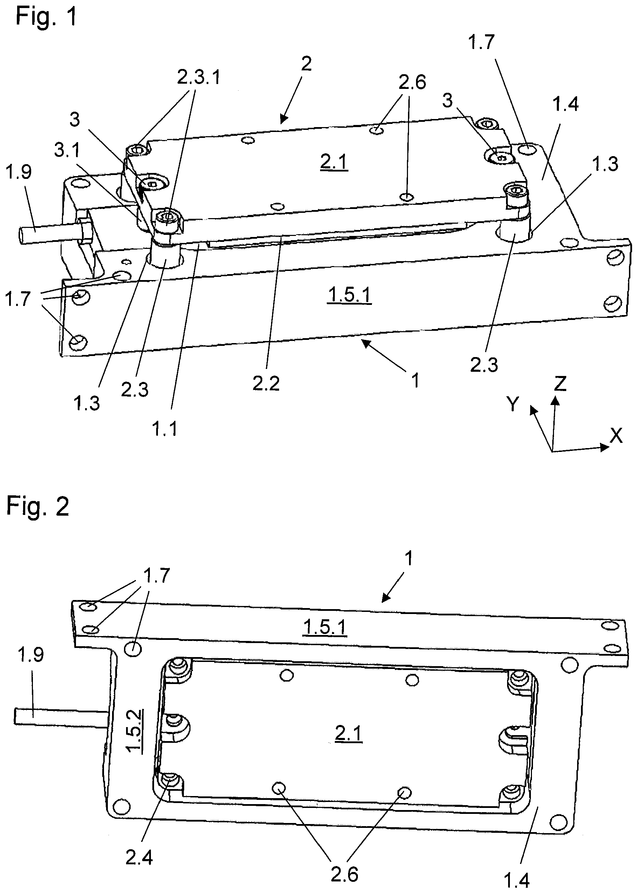

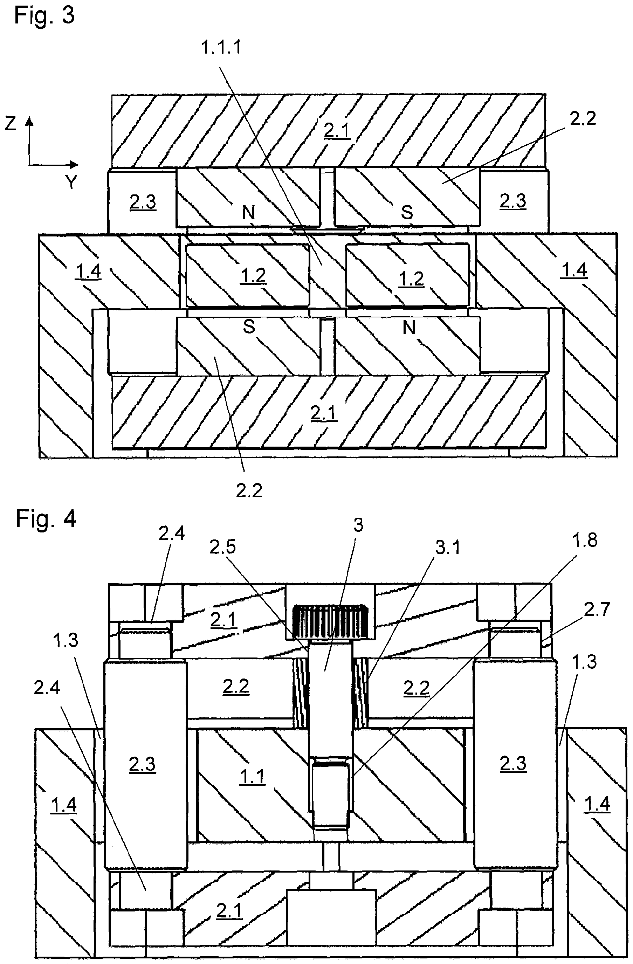

Die Figuren 1 und 2 zeigen ein erstes Ausführungsbeispiel für einen kurzhubigen Linearmotor gemäß der Erfindung. Aus zwei unterschiedlichen Blickrichtungen ist ein Primärteil 1 und ein Sekundärteil 2 des Linearmotors dargestellt. Die Figuren 3 und 4 zeigen Schnitte durch diesen Linearmotor.

Das Primärteil 1 weist einen zentralen, flächigen Bereich auf, bei dem es sich um einen Spulenträger 1.1 handelt. Der flächige Bereich erstreckt sich in der X-Y-Ebene, wobei der Linearmotor einen Antrieb in Y-Richtung darstellt. In diesem Spulenträger 1.1 sind flache Spulen 1.2 angeordnet, die erst in der Schnittzeichnung der Figur 3 zu erkennen sind, weil sie innerhalb des Spulenträgers 1.1 mit einer Vergussmasse 1.1.1 (z.B. ein Epoxidharz) vergossen und mit Abdeckungen geschützt sind. Die Vergussmasse 1.1.1 leitet in den Spulen 1.2 entstehende Wärme ab und gleicht dabei unterschiedliche Ausdehnungskoeffizienten der Spulen 1.2, des Spulenträgers 1.1 und der erwähnten Abdeckungen aus.

Mit dem Begriff "flache Spulen" seien hier Spulen bezeichnet, deren axiale Länge kleiner oder deutlich kleiner ist als deren Durchmesser. Üblicherweise sind in einer solchen Spule viele Windungen Draht in radialer Richtung nebeneinander aufgewickelt, aber nur eine oder wenige Lagen Draht in axialer Richtung übereinander.

Der Spulenträger 1.1 ist mit einem stabilen Rahmen 1.4 verbunden (oder beide Elemente sind sogar einstückig ausgebildet) und von diesem Rahmen 1.4 umgeben. Der Rahmen 1.4 weist Montageflächen 1.5.1 und 1.5.2 mit Montagebohrungen 1.7 auf, die zur Befestigung des Primärteils 1 an einer Applikation dienen. Indem zwei unterschiedlich orientierte Montageflächen 1.5.1 bzw. 1.5.2 zur Verfügung stehen, können unterschiedliche Einbaulagen gewählt werden, um somit unterschiedliche Arbeitsrichtungen bedienen zu können. Der Rahmen 1.4 und der flächige Bereich 1.1 sind aus einem nicht ferromagnetischen Material wie beispielsweise Aluminium gefertigt. Im Rahmen 1.4 ist eine Aussparung vorgesehen, durch die eine Zuleitung 1.9 verläuft, über die die Spulen 1.2 mit Strom versorgt werden.

Das Sekundärteil 2 weist zwei flächige Magnetträger 2.1 auf, die als ferromagnetische Platten ausgebildet und beidseits des Spulenträgers 1.1 angeordnet sind. In der Figur 1 erkennt man den oberen, außerhalb des Primärteils 1 angeordneten Magnetträger 2.1, in der Figur 2 den unteren Magnetträger 2.1, der innerhalb des Rahmens 1.4 angeordnet ist. Der Rahmen 1.4 ist in Z-Richtung deutlich breiter als der Spulenträger 1.1, so dass der untere Magnetträger 2.1 in Z-Richtung nicht über den Rahmen 1.4 hinaus ragt.

Beide Magnetträger 2.1 tragen Magnete 2.2 auf ihrer dem Spulenträger 1.1 zugewandten Seite. In üblicher Weise sind die Magnete 2.2 in der Antriebsrichtung Y mit abwechselnder Polarität auf den Magnetträgern 2.1 angeordnet, während sich jeweils unterschiedliche Magnetpole N, S beidseits des Spulenträgers 1.1 gegenüber liegen. Die Anordnung der Spulen 1.2 und Magnete 2.2 lässt sich gut in der Figur 3 erkennen, da hier ein Schnitt durch diesen Bereich des Linearmotors gezeigt ist.

Da der Linearmotor als eisenloser Motor ausgeführt ist, bewirken die Magnete 2.2 keine Anziehungskräfte auf das Primärteil 1. Die beiden Magnetträger 2.1 ziehen sich aber gegenseitig an. Um die beiden Magnetträger 2.1 auf Abstand zu halten und zwischen den Magneten 2.2 einen Luftspalt zur Verfügung zu stellen, in dem sich das Primärteil 1 relativ zum Sekundärteil 2 bewegen kann, sind vier Abstandshalter 2.3 jeweils mit beiden Magnetträgern 2.1 mittels Schrauben 2.3.1 verbunden. Die Bohrungen 2.4 zur Aufnahme dieser Schrauben 2.3.1 sind in den Figuren 2 und 4 zu erkennen, in denen diese Schrauben 2.3.1 der Übersichtlichkeit halber nicht gezeigt sind.

Die Figur 4 zeigt einen Schnitt durch den Bereich der Abstandshalter 2.3. Die Abstandhalter 2.3 sind nicht wie bei üblichen Linearmotoren dieser Bauart seitlich am Primärteil 1 vorbei geführt, vielmehr verlaufen sie durch Öffnungen 1.3 im Primärteil 1. Dies schränkt zwar den möglichen Bewegungsbereich des Linearmotors sowohl in seiner Arbeitsrichtung Y als auch senkrecht dazu in X - Richtung erheblich ein. Da der Linearmotor aber zur aktiven Dämpfung von Schwingungen nur sehr kleine Auslenkungen ermöglichen muss, ist dies kein Nachteil. Auf der anderen Seite bringt diese Anordnung der Abstandshalter 2.3 Vorteile, denn sie ermöglicht einen besonders kompakten Aufbau des Linearmotors, der ohne das Primärteil 1 umgreifender Struktur auskommt, wie sie im Stand der Technik üblich sind. Außerdem bilden die Öffnungen 1.3 und die Abstandshalter 2.3 Anschläge in X- und Y-Richtung, die im Notfall, etwa bei zu großen von außen eingeprägten Kräften, eine zu große relative Verschiebung zwischen den bewegten Massen verhindern. Sind sowohl die Öffnungen 1.3 im Primärteil 1 als auch die Abstandshalter 2.3 des Sekundärteils 2 im Querschnitt kreisförmig, so bestimmt der Unterschied der beiden Durchmesser den zur Verfügung stehenden Bewegungsbereich in X- und Y-Richtung. In Z-Richtung begrenzt der Luftspalt zwischen den Magneten 2.2 die Bewegungsfreiheit des Primärteils 1 bzw. des Spulenträgers 1.1 relativ zum Sekundärteil 2.

Um die Magnetfelder der Magnete 2.2 nicht zu stören, sind die wegen der Kompaktheit des Linearmotors besonders nahe an den Magneten 2.2 angeordneten Abstandshalter 2.3 aus einem nichtmagnetischen Material wie Edelstahl gefertigt. Wegen des dadurch fehlenden Rückschlusses des magnetischen Feldes von einem Magnetträger 2.1 zum anderen empfiehlt es sich, auf jedem der Magnetträger 2.1 eine gerade Anzahl von Magneten vorzusehen, die jeweils mit abwechselnder Polarität nebeneinander angeordnet sind, so dass in einigem Abstand zu einem Magnetträger 2.1 das Magnetfeld verschwindet. Sich gegenüber liegende Pole zweier Magnete 2.2 sind dabei unterschiedlich, so dass sich innerhalb des Luftspalts des Sekundärteils 2 eine hohe Modulation der Feldstärke ergibt. Durch die Bestromung der Spulen 1.2 im Primärteil 1 können so besonders hohe Kräfte erzielt werden.

Im eingebauten Zustand wird die Relativlage zwischen Primärteil 1 und Sekundärteil 2 durch die jeweilige Applikation vorgegeben. Solange der Linearmotor aber noch nicht eingebaut ist, kann eine Transportsicherung 3 nützlich sein, deren Ausgestaltung am besten in der Figur 4 zu erkennen ist. Die Transportsicherung umfasst eine Schraube 3, die durch eine Bohrung 2.5 im oberen Magnetträger 2.1 geführt ist. An ihrem Ende weist diese Schraube 3 ein Gewinde auf, mit dem sie in ein entsprechendes Gewinde in der Bohrung 1.8 im Primärteil 1 geschraubt ist. Der Durchmesser der Schraube 3 und der Durchmesser der Bohrung 2.5 im Magnetträger 2.1 entsprechen einander. Damit ist die Relativlage in X-Y-Richtung zwischen Primärteil 1 und Sekundärteil 2 festgelegt, denn die beiden Magnetträger 2.1 sind über die Abstandshalter 2.3 fest miteinander verbunden.

In Z-Richtung wird die Relativlage von Primärteil 1 und Sekundärteil 2 fixiert, indem beim Anziehen der Schraube 3 eine über die Schraube 3 geschobene Hülse 3.1 zwischen dem Primärteil 1 und Sekundärteil 2 eingeklemmt wird. Wird die Transportsicherung 3 entfernt, kann auch die Hülse 3.1 aus dem Luftspalt zwischen dem Primärteil 1 und dem Sekundärteil 2 genommen werden.

Mit den beiden in der Figur 1 dargestellten Schrauben 3 ist die Relativlage von Primärteil 1 und Sekundärteil 2 in allen sechs Freiheitsgraden festgelegt.

Um eine genaue Ausrichtung der Abstandhalter 2.3 zueinander zu erreichen, weisen die Abstandshalter 2.3 Führungsflächen 2.7 auf, die mit entsprechenden Flächen der Bohrungen 2.4 im oberen Magnetträger 2.1 korrespondieren. Aus Kostengründen ist an jedem Abstandshalter 2.3 nur eine solche Führungsfläche 2.7 vorgesehen, dann damit ist die Ausrichtung der Abstandshalter 2.3 zueinander bereits festgelegt. Die beiden Magnetträger 2.1 werden in X-Y-Richtung mit Hilfe einer Montagevorrichtung zueinander ausgerichtet, die sich auf die Bohrungen 2.5 für die Transportsicherung 3 bezieht.

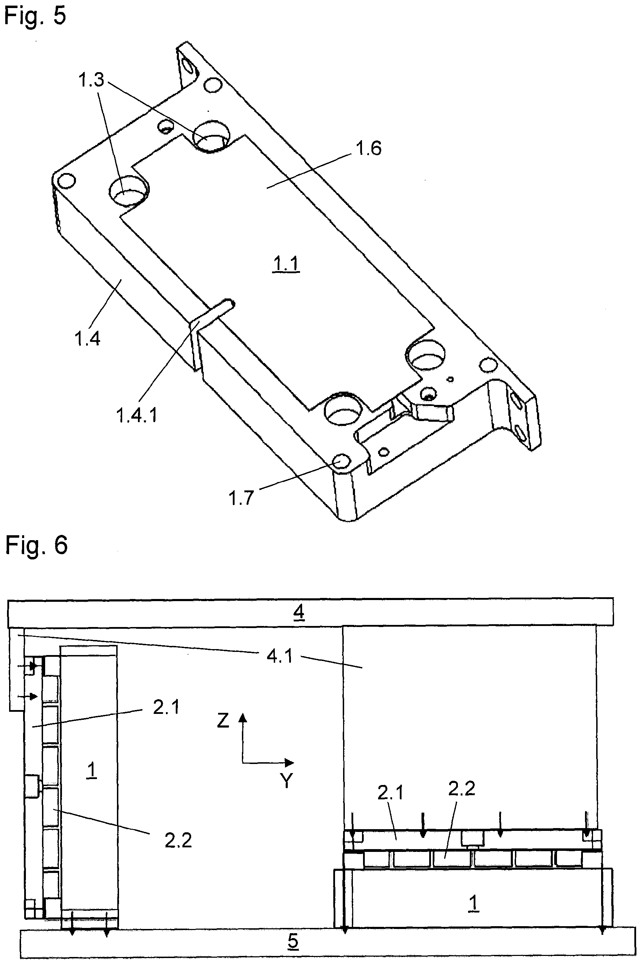

In der Figur 5 ist ein weiteres Ausführungsbeispiel der Erfindung dargestellt. die hier vorgestellten Maßnahmen sind nicht nur in ihrer Gesamtheit nützlich, sondern können jeweils einzeln auch mit dem ersten Ausführungsbeispiel sinnvoll kombiniert werden.

Wie erwähnt wird das Primärteil 1 beispielsweise mittels eines Fräsprozesses aus einem nicht ferromagnetischen Material gefertigt. Wegen deren guter Wärmeleitfähigkeit zum Abtransport der in den Spulen 1.2 erzeugten Wärme sind dabei elektrisch leitfähige Materialien wie Aluminium oder Kupfer bevorzugt. Durch sich ändernde Ströme in den Spulen 1.2 werden darin allerdings Wirbelströme erzeugt, die die Dynamik des Linearmotors vermindern. Um solche Wirbelströme zu vermeiden oder wenigstens zu reduzieren, ist in diesem Ausführungsbeispiel eine Unterbrechung 1.4.1 des Rahmens 1.4 des Primärteils 1 vorgesehen.

Der besonders stabile Rahmen 1.4 eignet sich ansonsten gut, in den Spulen 1.2 erzeugt Wärme zu den großflächigen Montageflächen 1.5.1 bzw. 1.5.2 zu leiten, die üblicherweise mit einem sehr massiven, als Wärmesenke dienenden Körper aus Stahl in Verbindung stehen. Um den Transport der Wärme von den Spulen 1.2 zum Rahmen 1.4 zu unterstützen, sind die Spulen 1.2 im Spulenträger 1.1 nicht nur wie üblich mit einem gut wärmeleitfähigen Harz 1.1.1 vergossen, sondern in diesem Ausführungsbeispiel auch mit Karbonfaserplatten 1.6 auf beiden Seiten der flächigen Spulen 1.1 abgedeckt. Solche Karbonfaserplatten 1.6 verhalten sich elektrisch (keine Wirbelströme) und magnetisch (keine Kräfte durch das herrschende Magnetfeld) neutral, ganz im Gegensatz zu Abdeckungen aus Aluminium, Kupfer oder gar Eisen. Karbonfaserplatten 1.6 leiten aber die Abwärme der Spulen 1.2 gut zum Rahmen 1.4 und bieten auch einen guten mechanischen Schutz.

In den bisherigen Ausführungsbeispielen wies das Primärteil 1 eine einzelne Spule 1.2 und auf jedem Magnetträger 2.1 zwei Magnete 2.2 auf. Um die zur Verfügung stehende Kraft des Linearmotors zu erhöhen, lässt sich die Ausdehnung des Motors in Y-Richtung erhöhen, um dann zusätzliche Spulen 1.2 und Magnete 2.2 einzubauen. Dabei kann die Zahl der Spulen 1.2 um jeweils eine, die der Magneten 2.2 um jeweils zwei (pro Magnetträger 2.1) erhöht werden.

In der Figur 6 ist schematisch angedeutet, dass der Linearmotor in unterschiedlichen Lagen und damit zur Schwingungsdämpfung in unterschiedlichen Richtungen angebaut werden kann. In der Figur 6 erkennt man zwei solcher Linearmotoren mit sechs Magneten 2.2 auf jedem Magnetträger 2.1 (und damit 3 flachen Spulen 1.2 im Primärteil 1), die zur Schwingungsdämpfung in Y- bzw. Z-Richtung eingesetzt sind. Beide sind zwischen einem als Plattform für eine Positioniereinrichtung dienenden Granit 4 und einer Basis 5 angeordnet. Dabei ist das Primärteil 1 jeweils unmittelbar mit der Basis 5 verbunden (Die Pfeile in der Figur 8 deuten Verschraubungen an), wobei jeweils unterschiedliche Montageflächen 1.5.1 bzw. 1.5.2 zum Einsatz kommen. Die Abwärme des Primärteils 1 wird also zur Basis 5 hin abgeleitet, so dass der Granit 4 als Träger der Positioniereinrichtung kühl bleibt. Das Sekundärteil 2 ist jeweils über eine passende mechanische Schnittstelle 4.1 mit dem Granit 4 verbunden. Die zur Montage notwendigen Montagebohrungen 1.7 des Primärteils 1 und Montagebohrungen 2.6 in den Magnetträgern 2.1 des Sekundärteils 2 sind in den vorangehenden Figuren gut zu erkennen.

Um Kosten zu reduzieren, sind beide Magnetträger 2.1 völlig identisch ausgeführt, auch wenn einzelne Details wie z.B. Montagebohrungen 2.6 in einer der beiden Positionen gar nicht benötigt werden.

## Patentansprüche

1. Linearmotor für kurze Hübe, mit einem Primärteil (1) mit einem Spulenträger (1.1) und darin angeordnet wenigstens eine Spule (1.2), sowie einem relativ zum Primärteil (1) beweglichen Sekundärteil (2), das beidseits des Spulenträgers (1.1) angeordnete Magnetträger (2.1) mit Magneten (2.2) aufweist, die durch Abstandshalter (2.3) so voneinander getrennt sind, dass der Spulenträger (1.1) zwischen den beiden Magnetträgern (2.1) beweglich ist, **dadurch gekennzeichnet, dass** die Abstandshalter (2.2) durch Öffnungen (1.3) im Primärteil (1) geführt sind.

2. Linearmotor nach Anspruch 1, **dadurch gekennzeichnet, dass** die Öffnungen (1.3) die Beweglichkeit des Primärteils (1) relativ zum Sekundärteil (2) in zwei Raumrichtungen (X, Y) begrenzen.

3. Linearmotor nach Anspruch 1 oder 2, **dadurch gekennzeichnet, dass** ein Abstand der Magnetträger (2.1) bzw. der darauf angeordneten Magnete (2.2) die Beweglichkeit des Primärteils (1) relativ zum Sekundärteil (2) in einer dritten Raumrichtung (Z) begrenzt.

4. Linearmotor nach einem der vorhergehenden Ansprüche, **dadurch gekennzeichnet, dass** die Abstandshalter (2.3) aus einem nicht ferromagnetischen Material gefertigt sind, vorzugsweise aus Edelstahl.

5. Linearmotor nach Anspruch 4, **dadurch gekennzeichnet, dass** auf jedem der Magnetträger (2.1) eine gerade Anzahl von Magneten (2.2) angeordnet ist.

6. Linearmotor nach einem der vorhergehenden Ansprüche, **dadurch gekennzeichnet, dass** das Primärteil (1) einen Rahmen (1.4) aufweist, der um den Spulenträger (1.1) herum verläuft.

7. Linearmotor nach Anspruch 6, **dadurch gekennzeichnet, dass** der Rahmen (1.4) zwei Montageflächen (1.5.1, 1.5.2) unterschiedlicher Ausrichtung (X-Z, X-Y) aufweist, die jeweils mit Montagebohrungen (1.7) versehen sind, die der Befestigung des Primärteils (1) an einer Applikation dienen.

8. Linearmotor nach Anspruch 6 oder 7, **dadurch gekennzeichnet, dass** der Rahmen (1.4) aus einem elektrisch leitfähigen Material gefertigt und an einer Stelle (1.4.1) unterbrochen ist.

9. Linearmotor nach einem der vorhergehenden Ansprüche, **dadurch gekennzeichnet, dass** die wenigstens eine Spule (1.2) in Öffnungen des Spulenträgers (1.1) angeordnet ist.

10. Linearmotor nach Anspruch 9, **dadurch gekennzeichnet, dass** die wenigstens eine Spule (1.2) mit einer Vergussmasse (1.1.1) vergossen ist, und/oder dass die wenigstens eine Spule (1.2) mit Karbonfaserplatten (1.6) abgedeckt ist.

11. Linearmotor nach Anspruch 6 und 10, **dadurch gekennzeichnet, dass** die wenigstens eine Spule (1.2) durch die Vergussmasse (1.1.1) und/oder die Karbonfaserplatten (1.6) thermisch an den Rahmen (1.4) angebunden ist.

12. Linearmotor nach einem der vorhergehenden Ansprüche, **dadurch gekennzeichnet, dass** am Primärteil (1) und am Sekundärteil (2) Einrichtungen (1.8, 2.4) für eine Transportsicherung (3) vorgesehen sind, mit der das Primärteil (1) und das Sekundärteil (2) relativ zueinander fixierbar sind.

13. Linearmotor nach einem der vorhergehenden Ansprüche, **dadurch gekennzeichnet, dass** der Linearmotor als eisenloser Linearmotor ausgebildet ist.

14. Schwingungsisolierte Plattform für eine Positionierungseinrichtung, bei der zur aktiven Dämpfung von Schwingungen zwischen der Plattform (4) und einer Basis (5) wenigstens ein Linearmotor nach einem der vorhergehenden Ansprüche angeordnet ist, wobei das Primärteil (1) mit der Basis (5) und das Sekundärteil (2) mit der Plattform (4) verbunden ist.

## Claims

1. Linear motor for short strokes, comprising a primary part (1) having a coil carrier (1.1) and at least one coil (1.2) arranged therein, and a secondary part (2) movable relative to the primary part (1), which has magnet carriers (2.1) having magnets (2.2) arranged on both sides of the coil carrier (1.1), which are separated from one another by spacers (2.3), so that the coil carrier (1.1) is movable between the two magnet carriers (2.1), **characterized in that** the spacers (2.2) are guided through openings (1.3) in the primary part (1).

2. Linear motor according to Claim 1, **characterized in that** the openings (1.3) delimit the mobility of the primary part (1) relative to the secondary part (2) in two spatial directions (X, Y).

3. Linear motor according to Claim 1 or 2, **characterized in that** a spacing of the magnet carriers (2.1) and/or the magnets (2.2) arranged thereon delimits the mobility of the primary part (1) relative to the secondary part (2) in a third spatial direction (Z).

4. Linear motor according to any one of the preceding claims, **characterized in that** the spacers (2.3) are manufactured from a non-ferromagnetic material, preferably from stainless steel.

5. Linear motor according to Claim 4, **characterized in that** an even number of magnets (2.2) is arranged on each of the magnet carriers (2.1).

6. Linear motor according to any one of the preceding claims, **characterized in that** the primary part (1) has a frame (1.4), which extends around the coil carrier (1.1).

7. Linear motor according to Claim 6, **characterized in that** the frame (1.4) has two mounting surfaces (1.5.1, 1.5.2) of different alignments (X-Z, X-Y), which are each provided with mounting boreholes (1.7), which are used for fastening the primary part (1) on an application.

8. Linear motor according to Claim 6 or 7, **characterized in that** the frame (1.4) is manufactured from an electrically conductive material and is interrupted at one point (1.4.1).

9. Linear motor according to any one of the preceding claims, **characterized in that** the at least one coil (1.2) is arranged in openings of the coil carrier (1.1).

10. Linear motor according to Claim 9, **characterized in that** the at least one coil (1.2) is potted using a potting compound (1.1.1), and/or the at least one coil (1.2) is covered using carbon fibre plates (1.6).

11. Linear motor according to Claims 6 and 10, **characterized in that** the at least one coil (1.2) is thermally connected to the frame (1.4) by the potting compound (1.1.1) and/or the carbon fibre plates (1.6).

12. Linear motor according to any one of the preceding claims, **characterized in that** devices (1.8, 2.4) for a transport safeguard (3), using which the primary part (1) and the secondary part (2) are fixable relative to one another, are provided on the primary part (1) and on the secondary part (2).

13. Linear motor according to any one of the preceding claims, **characterized in that** the linear motor is designed as an ironless motor.

14. Vibration-isolated platfonn for a positioning device, in which at least one linear motor according to any one of the preceding claims is arranged between the platform (4) and a base (5) for active damping of vibrations, wherein the primary part (1) is connected to the base (5) and the secondary part (2) is connected to the platform (4).

## Revendications

1. Moteur linéaire à courte course, présentant une partie primaire (1) dotée d'un porte-bobines (1.1) dans lequel est disposée au moins une bobine (1.2) ainsi qu'une partie secondaire (2) mobile par rapport à la partie primaire (1) et présentant des deux côtés du porte-bobines (1.1) des porte-aimants (2.1) dotés d'aimants (2.2) maintenus à distance les uns des autres par des écarteurs (2.3) de telle sorte que le porte-bobine (1.1) puisse se déplacer entre les deux porte-aimants (2.1),
**caractérisé en ce que**
les écarteurs (2.2) traversent la partie primaire (1) par des ouvertures (1.3).

2. Moteur linéaire selon la revendication 1, **caractérisé en ce que** les ouvertures (1.3) limitent la mobilité de la partie primaire (1) par rapport à la partie secondaire (2) dans deux directions (X, Y) de l'espace.

3. Moteur linéaire selon les revendications 1 ou 2, **caractérisé en ce que** la distance entre le porte-aimants (2.1) et les aimants (2.2) qui y sont placés limite la mobilité de la partie primaire (1) par rapport à la partie secondaire (2) dans une troisième direction (Z) de l'espace.

4. Moteur linéaire selon l'une des revendications précédentes, **caractérisé en ce que** les écarteurs (2.3) sont réalisés en un matériau non ferromagnétique, de préférence en acier allié.

5. Moteur linéaire selon la revendication 4, **caractérisé en ce qu'**un nombre pair d'aimants (2.2) est disposé sur chacun des porte-aimants (2.1).

6. Moteur linéaire selon l'une des revendications précédentes, **caractérisé en ce que** la partie primaire (1) présente un cadre (1.4) qui s'étend autour du porte-bobines (1.1).

7. Moteur linéaire selon la revendication 6, **caractérisé en ce que** le cadre (1.4) présente deux surfaces de montage (1.5.1, 1.5.2) dont les orientations (X-Z, X-Y) sont différentes, chacune dotée d'alésages de montage (1.7) qui servent à fixer la partie primaire (1) sur une application.

8. Moteur linéaire selon les revendications 6 ou 7, **caractérisé en ce que** le cadre (1.4) est réalisé en un matériau électriquement conducteur et est interrompu en un emplacement (1.4.1).

9. Moteur linéaire selon l'une des revendications précédentes, **caractérisé en ce que** la ou les bobines (1.2) sont disposées dans des ouvertures du porte-bobines (1.1).

10. Moteur linéaire selon la revendication 9, **caractérisé en ce que** la ou les bobines (1.2) sont englobées dans une pâte de coulée (1.1.1) et/ou **en ce que** la ou les bobines (1.2) sont recouvertes par des plaques (1.6) en fibres de carbone.

11. Moteur linéaire selon les revendications 6 et 10, **caractérisé en ce que** la ou les bobines (1.2) sont reliées thermiquement au cadre (1.4) par la pâte de coulée (1.1.1) et/ou les plaques (1.6) en fibres de carbone.

12. Moteur linéaire selon l'une des revendications précédentes, **caractérisé en ce que** des dispositifs (1.8, 2.4) pour le blocage (3) pendant le transport, par lesquels la partie primaire (1) et la partie secondaire (2) peuvent être immobilisées l'une par rapport à l'autre, sont prévus sur la partie primaire (1) et sur la partie secondaire (2).

13. Moteur linéaire selon l'une des revendications précédentes, **caractérisé en ce que** le moteur linéaire est un moteur linéaire sans induit.

14. Plateforme isolée des vibrations pour un dispositif de positionnement, dans laquelle au moins un moteur linéaire selon l'une des revendications précédentes est disposé pour l'amortissement actif des vibrations entre la plateforme (4) et une base (5), la partie primaire (1) étant reliée à la base (5) et la partie secondaire (2) à la plateforme (4).
